# EUROPEAN PATENT SPECIFICATION

(11) **EP 0 763 684 B1**
(45) Date of publication and mention of the grant of the patent: **06.12.2000**
(21) Application number: 96306665.9
(22) Date of filing: 13.09.1996
(51) Int. Cl.: F16K 35/00

(54) **Apparatus for automatic blocking of gas in a gas circuit**
Gerät zum automatischen Unterbrechen des Gasstromes in einem Gaskreis
Appareil pour la coupure automatique du gaz dans un circuit de gaz

(30) Priority: 15.09.1995 BR 9504675; 18.09.1995 BR 7502246
(43) Date of publication of application: 19.03.1997
(73) Proprietor: Cavalieri, Rolnaldo, Diadema, Estado de Sao Paulo (BR)
(72) Inventor: Cavalieri, Rolnaldo, Diadema, Estado de Sao Paulo (BR)
(74) Representative: Murgatroyd, Susan Elizabeth

(56) References cited:
- GB-A- 2 159 249
- PATENT ABSTRACTS OF JAPAN vol. 7, no. 68 (M-201), 19 March 1983 & JP-A-57 208373 (KIYOUDOU GAS KOGYO), 21 December 1982,
- PATENT ABSTRACTS OF JAPAN vol. 10, no. 88 (M-467), 5 April 1986 & JP-A-60 226619 (TOUYOU GASMEETA KK), 11 November 1985,
- PATENT ABSTRACTS OF JAPAN vol. 5, no. 39 (M-059), 14 March 1981 & JP-A-55 165422 (SAKAMOTO JITSUO), 23 December 1980,

## Description

The present invention relates to apparatus for automatic blocking or obturation of gas in a gas circuit, in particular for use in the field of safety equipment for residential gas installations or the like and which has an arrangement designed to provide a suitable utilization and which is assembled on different blocking parts of different gas circuits.

It is known that one of the great risks involving inflammable gases such as GLP or natural gas is the possibility of leakages which may harm somebody's health or cause explosions.

Having such circumstances in mind and in order to overcome them, an object of the invention is to provide gas blocking apparatus which is capable of stopping leakage of gas from a gas circuit especially for domestic use and to provide an arrangement which facilitates the construction and utilization of such apparatus.

Accordingly, the present invention consists in apparatus for automatic blocking of gas in a gas circuit, said apparatus being formed by: an automatic electrical actuating assembly comprising a sensor which detects gas leakage and a solenoid electrically connected thereto; and by a gas obturating assembly subjected to the automatic electrical actuating assembly to close the gas circuit upon detection of gas leakage; said solenoid comprising a coil, a movable member subjected to the coil, and a compression spring which acts in opposite directions; said movable member comprising a rod which extends axially through the coil and one end of which has an element and the compression spring and the opposite end of which has a supporting plate on which a second spring acts, which works in collaboration with the obturating assembly; and a retaining device for retaining the apparatus in the gas blocking position; said retaining device comprising a member provided on the surface of the element opposite to the surface facing the coil and retaining means for holding the member in the blocking position of the apparatus, and an unblocking member mounted on the end of the member for releasing said member from the blocking position; and said obturating assembly comprising a connection for connection to the gas circuit and an obturator which, when controlled by the solenoid, moves between two positions, one position in which the gas circuit is open and another position in which the gas circuit is closed.

The invention will now be described by way of example with reference to the accompanying drawings, in which:-
Figure 1 shows a sectional view of gas blocking apparatus in accordance with one embodiment of the invention, with the apparatus in the "open" position, ie. such that the gas flow is not blocked;
Figure 2 shows a sectional view of gas blocking apparatus in accordance with a second embodiment of the invention in which the apparatus is connected to a valve of a compressed gas vessel and is in a "closed" position, ie. such that the gas flow is interrupted or blocked; and
Figure 3 shows a sectional view of a third embodiment of the invention, forming a gas pressure regulator and in the "in cut" position of the gas flow.

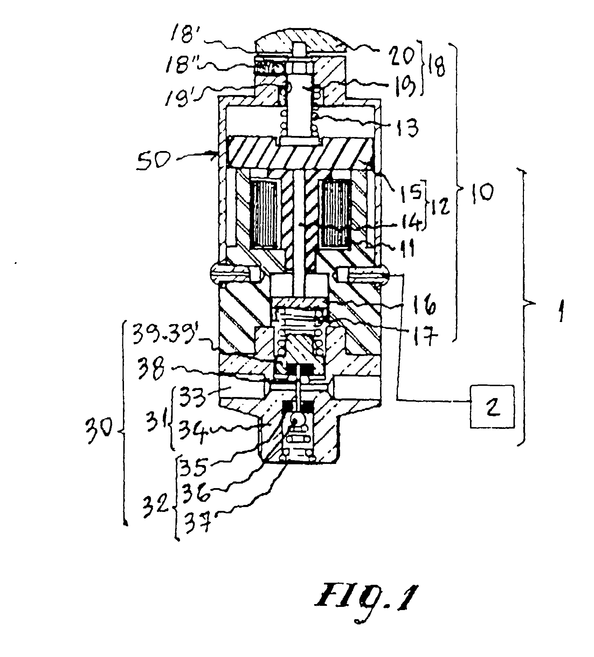

The apparatus of the present invention is designed in order to be used in gas circuits between a gas vessel(not shown) and a device fed by gas, such as stoves, ovens, heaters or other gas-supplied devices (not shown). It provides an arrangement designed to make the composition of different arrangements for gas blocking possible and is substantially formed, as shown in Figure 1, by an electrical automatic actuating assembly 1 comprising a sensor 2 which detects gas leakages and a solenoid 10 which is actuated by the sensor, and a gas blocking or obturating assembly 30 subjected to the electrical automatic actuating assembly 1 to automatically close the gas circuit to which the apparatus is connected, and means for manually releasing the apparatus to re-open the gas circuit. Both assemblies 1 and 30 may be formed in accordance with the type of compounded blocking assembled in a housing 50 and composing a unique or single body.

In the embodiment shown in Figure 1, the solenoid 10 is substantially formed by a coil 11, a movable member 12 actuated by the coil 11, and a compression spring 13 which acts in opposite directions to move the obturating assembly 30 between two positions for the closing and opening of the gas circuit respectively. The movable member 12 comprises a rod 14 which extends axially through the coil 11. At one end of the rod 14 there is an element 15 and a compression spring 13 and at the opposite end of said rod there is a supporting plate 16 on which a second spring 17 acts which works in collaboration with the obturating assembly 30 in the gas circuit. The apparatus also includes a retaining device 18 which retains it in the gas blocking position. The device 18 is formed by a pin 19 provided on the surface of the element 15 opposite to the surface facing the coil 11 and around which the compression spring 13 is mounted, and retaining means for holding the pin 19 in the blocking position, of the apparatus. The retaining means comprises a sphere 18', urged by a spring 18" against the pin 19, the sphere 18' being received in a recess 19' in the pin 19 when in the position that the apparatus closes the gas circuit. The apparatus further includes an unblocking button 20 mounted on the end of the pin 19 and which is manually depressed in order to release the obturating assembly to re-open the gas circuit.

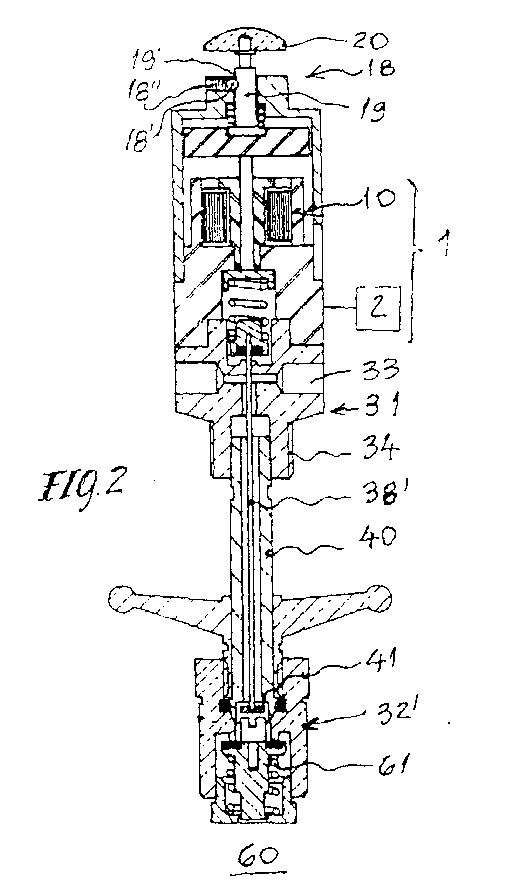

The gas circuit obturating assembly 30 is in accordance with the components of the gas circuit with which the blocking apparatus is associated and in one example basically comprises a connection 31 for connection to the gas circuit and an obturator 32 which, when controlled by the solenoid 10, moves from the position which opens the gas circuit (fig. 1) to a position which closes the gas circuit (fig. 2).

In the embodiment of figure 1, the apparatus is arranged to block a gas line, and the obturating assembly 30 is formed by a connection 31 which has the shape of a cross comprising two opposite radial passages 33 and a first axial passage 34 which is intercalated in the gas circuit, and by a ball or sphere valve 32 mounted in said first axial passage 34 and having a seal made of a sealing O'ring 35 and a ball or sphere 36 urged by a spring 37 to push against the seal and a needle 38 which pushes the ball or sphere off of the seal and which crosses the radial passages 33 and enters a second axial passage 34 of the connection 31. The needle 38 is mounted on a base 39 subjected to the second spring 17, the opposite end of which is against the supporting plate 16 of the movable member 12 of the solenoid 10.

In the second embodiment shown in Figure 2, the apparatus provides a gas blocking in a valve 32' of a compressed gas vessel 60 and has basically the same construction as the first embodiment for line blocking. However, the second embodiment does not contain the sphere valve 32 and, instead of the needle 38, is provided with a rod 38' projecting out of the first axial passage 34 of the connection 31. The rod 38' extends inside a threaded connection 40 assembled in said first axial passage 34 and may be connected to the valve 32' of the compressed gas vessel 60 and the opposite end of said rod 38' has a skid 41 which acts on a needle assembly 61 of said valve 32' of the vessel 60.

When the apparatus is in the position shown in Fig. 1, in which it does not block the gas circuit, the solenoid 10 is deenergized and the compression spring 13 pushes the movable member 12 to an advanced position against the force of the second spring 17 and moves the base 39 against the force of the second axial passage 34 of the connection 31 where a sealing plate 39' of said base 39 provided around the needle 38, or the rod 38' in Figure 2, seals the interstice between these and the wall of the passage to said needle 38 or rod 38'. The needle 38 or rod 38' is thus presented in an advanced position in which it opens respectively the sphere valve 32 or the valve 32' of the vessel 60 liberating the passage for gas which surrounds the first axial passage 34 and the radial passages 33 of the connection 31.

When a gas leakage occurs, the sensor 2 is activated, the solenoid 10 is energized, and the member 12 is pushed against the force of the compression spring 13 and pulls the needle 38 or the rod 38' to a position in which it closes respectively, the sphere valve 32 or valve 32' of the vessel. At the same time the retaining device 18 holds the assembly in this position and retains it even if the solenoid 10 is not energized, the retaining device 18 being released by manual operation of the unblocking button 20.

In this basic construction, it is intended that the materials, dimensions and constructive details of the apparatus to form the gas blocking may be modified so as to be adapted to different circumstances of use without departure from the scope of the present invention.

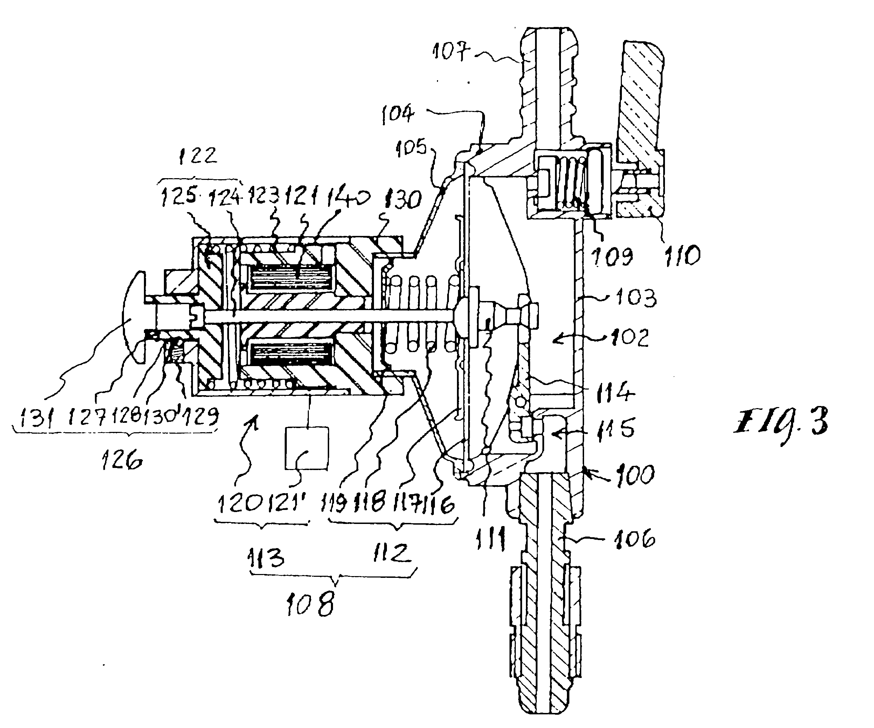

Thus, in another embodiment shown in Fig. 3, the apparatus may be used in association with a pressure regulator formed substantially by a regulating body 100 for regulating the pressure, having a central chamber 102 surrounded by an essentially planar posterior wall 103, side cylindrical walls 104 and an anterior wall constituted by a cover 105. The body 100 has an inferior entrance connection 106 and a superior exit connection 107 derived from side walls 104 and connected respectively to the valve of a vessel (not shown) and the linking pipes of a device (not shown). The regulator also comprises an automatic pressure regulating mechanism 108 housed in the chamber 102 and a gas interruption device 109 assembled along with the superior exit connection 107 and provided with a bundel or lever 110 exposed on the posterior wall 103 of the regulating body for manually closing the gas circuit.

The automatic pressure/cut gas regulating mechanism 108 is made by the association of the usual components for regulating pressure and the blocking apparatus and is formed essentially by: a member 111 subjected to a pneumatic regulating device 112 of the usual gas and/or to an electrical automatic actuating assembly 113 for blocking the gas. Member 111 acts on an arm 114 of a regulating device 115 for closing the gas passage assembled along with the inferior entrance connection 106. The pneumatic regulating device 112 comprises a diaphragm 116 with its periphery assembled between the body 100 and the anterior cover 105 and which in the central region acts on the member 111 and has a plate 117 mounted on it. A spring 118 for regulating the tension of the diaphragm is intercalated between the central plate 117 and a support 119 and is assembled in the anterior cover 105. The automatic electrical actuating assembly 113 for blocking or interrupting the gas is formed by a solenoid 120 and a sensor 121' for sensing gas leakage which actuates the solenoid 120 to move the arm 114 to a position in which the device 115 subjected to the latter closes the gas passage. There is also provided an automatic blocking device of the assembly in the closed position and means for manual unblocking.

In the basic construction of this assembly formed by the blocking device and the above pressure regulator, it is intended that some changes without changing the purpose of this assembly are expected.

Therefore the automatic electrical actuating assembly 113 for interrupting the gas has a structure formed by a solenoid 120 and by an element 130 for assembling on the cover 105 of the regulating body 100, both solenoid 120 and the assembling element 130 being assembled in a housing 140 and forming a unique or single body.

The solenoid 120 comprises a coil 121 and a movable element 122 subjected to the coil and to a compression spring 123 which moves in opposite directions corresponding to two positions of the device 115 for regulating the leakage and closing the gas, that is, one that closes and another one that does not close the gas, and in the latter, the device 115 for regulating the leakage and closing the gas is subjected to the pneumatic device 112 for regulating the pressure. The movable element 122 comprises a rod 124 which extends axially through the coil 121 of the solenoid and one end of which has a first element 125 on which the coil acts and also the compression spring 123 and the opposite end of which is connected to the member 111 and is also subjected to the diaphragm 116. A retaining device 126 comprises a member 127 extending from the surface of the element 125 opposite to the one facing the coil 121; retaining means of the apparatus in the closed position formed by a sphere 128 urged by a spring 129 against the member 127 and by a seat 130' formed in the member 127 and which receives the sphere 128 in the position in which the apparatus closes the gas passage; and a button 131 for manual release of the retaining device.

In one arrangement, the pneumatic device 112 for regulating the usual pressure of the gas and the automatic electrical actuating assembly 113 for closing the gas are exposed together on the same surface of the assembly of the gas regulator, especially on the anterior surface which is opposite to the one which has the manual actuator 110 of the device for manually closing the gas.

This arrangement facilitates the productive process of the gas regulator, since the body can be common in this type of equipment, that is, without any incorporated element in its posterior area besides the common bunder or actuating lever 110. The present arrangement of the gas regulator still facilitates access to its components which eventually have to be dealt with by the user.

In another possible construction, the automatic electrical actuating assembly 113 for closing the gas is in the posterior surface of the body of the regulator and the device 112 for regulating the pressure of the usual gas is in the anterior surface.

The construction of the pressure regulating assembly and the gas blocking apparatus above described is designed to provide pressure which has to be adjusted to the normal pressure of the device fed by the latter.

Such assembly however, may be obtained to lines with adequate pressure to the nominal pressure of the devices presented as natural gas providing lines. In this case, taking the fig. 3 as a base for the description, the assembly comprises the regulator body 100 removed or dismissed from the pressure regulator assembly 112 and the device 110 for manually closing the gas; the device 115 for closing the gas passage: the arm 114 which supports the device 115 by a spring (not shown) which acts on the end of the arm 114 opposite to the device 115 and moves the latter to the position which opens the gas passage; and the solenoid 120 which also acts on the end of the arm 114 and moves it to the position in which the device 115 closes the gas passage. In this case, the retaining means are made by blocking means of the assembly in the position for closing and opening the gas and comprise a sphere 128 urged by a spring 129 against the member 127 and by two seats 130, one for retaining the assembly when closing the gas and another when the gas is opened. A button 131 is also provided for the manual release of the blocking means.

## Claims

1. Apparatus for automatic blocking of gas in a gas circuit, said apparatus being formed by: an automatic electrical actuating assembly (1,113) comprising a sensor (2,121') which detects gas leakage and a solenoid (10,120) electrically connected thereto; and by a gas obturating assembly (30,115) subjected to the automatic electrical actuating assembly (1,113) to close the gas circuit upon detection of gas leakage; said solenoid (10,120) comprising a coil (11,121), a movable member (12,122) subjected to the coil (11,121), and a compression spring (13,123) which acts in opposite directions; said movable member (12,122) comprising a rod (14,124) which extends axially through the coil (11,121) and one end of which has an element (15,125) and the compression spring (13,123) and the opposite end of which has a supporting plate (16,117) on which a second spring (17,118) acts, which works in collaboration with the obturating assembly (30,115); and a retaining device (18,126) for retaining the apparatus in the gas blocking position; said retaining device (18,126) comprising a member (19,127) provided on the surface of the element (15,125) opposite to the surface facing the coil (11,121) and retaining means for holding the member (19,127) in the blocking position of the apparatus, and an unblocking member (20,131) mounted on the end of the member (19,127) for releasing said member (19,127) from the blocking position; and said obturating assembly (30,115) comprising a connection (31) for connection to the gas circuit and an obturator (32) which, when controlled by the solenoid (10,120), moves between two positions, one position in which the gas circuit is open and another position in which the gas circuit is closed.

2. Apparatus as claimed in claim 1, wherein the connection (31) is cross-shaped to form two opposite radial passages (33) and a first axial passage (34) which is intercalated in the gas circuit, and said obturator (32) comprises a sphere valve (32) mounted in the first axial passage (34) and having a seal formed by a sealing O'ring (35) and a sphere (36) urged by a spring (37) to push against the seal and a needle (38) which pushes the sphere (36) off of the seal and which crosses the radial passages (33) and enters a second axial passage of the connection (31), said needle (38) being mounted on a base (39) subjected to the second spring (17) the opposite end of which is against the supporting plate (16) of the movable member (12) of the solenoid (10).

3. Apparatus as claimed in claim 1, for use with a valve (32') of a gas vessel (60), wherein the connection (31) comprises a first axial passage (34) and said obturator comprises a rod (38') which extends out of the first axial passage (34) and inside a threaded connection (40) assembled in said first axial passage (34) and connectable to the valve (32') of the gas vessel (60), the opposite end of said rod (38') having a skid (41) which acts on a needle assembly (61) of said valve (32').

4. Apparatus as claimed in claim 1, for use with a gas pressure regulator and including a regulator body (100) having a central chamber (102) for regulating the gas pressure surrounded by a posterior wall (103), side cylindrical walls (104) and an anterior wall formed by a cover (105), said body (100) having an inferior entrance connection (106) and a superior exit connection (107) derived from the side walls (104) and for connection respectively to the valve of a gas vessel and to the linking pipes of a device; a regulating mechanism (108) for pressurizing and closing the gas circuit automatically, mounted in the chamber (102); and a manual device (109,110) for closing the gas circuit assembled together with the superior exit connection (107).

5. Apparatus as claimed in claim 4, wherein the regulating mechanism (108) comprises a member (111) subjected to a pneumatic device (112) for regulating the gas pressure and/or to said automatic electrical actuating assembly (113), the member (111) acting on an arm (114) of a regulating device (115) which serves as said gas obturating assembly for closing the gas passage assembled near the inferior gas entrance connection (106); said pneumatic device (112) for regulating the gas pressure comprising: a diaphragm (116) with its periphery assembled between the body (100) and the anterior cover (105) which in the central area is subjected to the member (111) and has said supporting plate (117) and said second spring (118) for regulating the tension of the diaphragm intercalated between the plate (117) and a support (119) assembled on the anterior cover (105); the gas leakage sensor (121) of said automatic electrical actuating assembly (113) being arranged to actuate the solenoid (12) to move the arm (114) to the position in which the device (115) subjected to the latter closes the gas passage.

6. Apparatus as claimed in claim 5, wherein the pneumatic device (112) for regulating the pressure of the gas and the automatic electrical actuating assembly (113) are mounted together on a surface of the gas regulator, especially on the anterior surface which is opposite to the one that has the manual device (109,110) for closing the gas circuit.

7. Apparatus as claimed in claim 5, wherein the automatic electrical actuating assembly (113) is on the posterior surface of the regulator body and the device (112) for regulating the gas pressure is on the anterior surface thereof.

8. Apparatus as claimed in claim 5, wherein the regulator body (100) is dismissed from the regulating pressure device (112) and from the manual device (109,110) for closing the gas circuit, and said gas pressure regulator comprises a device (115) which serves as said gas obturating assembly for closing the gas passage, an arm (114) which supports the device (115); and a spring which acts on the end of the arm (114) opposite to the device (115) and moves it to the position which opens the gas passage, the solenoid (120) also acting on the end of the arm (114) and moving it to the position in which the device (115) closes the gas passage.

9. Apparatus as claimed in any preceding claim, wherein said retaining device (18,126) comprises said member (19,127) extending from the surface of the element (15,125) opposite to the surface facing the coil (11,121); and said retaining means comprises a sphere (18",128) pressed by a spring (18',129) against the member (19,127) and a seat (19',130') formed in the member (19,127) which receives the sphere (18',128) in the position in which the apparatus closes the gas passage.

10. Apparatus as claimed in claim 9, wherein the retaining means comprises two seats (130'), one for holding the apparatus in the position in which the gas circuit is closed and the other for holding the apparatus in the position in which the gas circuit is open.

## Patentansprüche

1. Vorrichtung zum automatischen Unterbrechen des Gasstroms in einem Gaskreis, wobei die Vorrichtung gebildet wird aus: einer automatischen elektrischen Betätigungseinheit (1, 113), die einen Sensor (2, 121'), der eine Gasleckage erfasst, und ein elektrisch damit verbundenes Solenoid (10, 120) umfasst; und einer Gas-Schließeinheit (30, 115), die der automatischen elektrischen Betätigungseinheit (1, 113) unterworfen ist, um den Gaskreis bei Nachweis einer Gasleckage zu schließen; wobei das Solenoid (10, 120) eine Spule (11, 121), ein der Spule (11, 121) ausgesetztes bewegliches Element (12, 122) und eine Druckfeder (13, 123), die in entgegengesetzten Richtungen wirkt, umfasst; wobei das bewegliche Element (12, 122) eine Stange (14, 124) aufweist, die sich axial durch die Spule (11, 121) erstreckt und von der ein Ende ein Element (15, 125) und die Druckfeder (13, 123) aufweist und das andere Ende eine Stützplatte (16, 117) aufweist, auf die eine zweite Feder (17, 118), die mit der Schließeinheit (30, 115) zusammenarbeitet, einwirkt; und eine Haltevorrichtung (18, 126), um die Vorrichtung in der Gas-Unterbrechungsstellung zu halten; wobei die Haltevorrichtung (18, 126) ein Element (19, 127), das an der Oberfläche des Elements (15, 125) gegenüber der der Spule (11, 121) zugewandten Fläche vorgesehen ist, und eine Halteeinrichtung zum Halten des Elements (19, 127) in der Unterbrechungsstellung der Vorrichtung sowie ein Entblockierelement (20, 131) umfasst, das am Ende des Elements (19, 127) zum Lösen des Elements (19, 127) aus der Unterbrechungsstellung angebracht ist; und wobei die Schließanordnung (30, 115) ein Anschlussteil (31) zum Anschluss an den Gaskreis und ein Schließteil (32) umfasst, das sich bei Steuerung durch das Solenoid (10, 120) zwischen zwei Stellungen bewegt, wovon bei einer Stellung der Gaskreis geöffnet ist und bei der anderen Stellung der Gaskreis geschlossen ist.

2. Vorrichtung nach Anspruch 1, wobei der Anschluss (31) kreuzförmig ist, so dass zwei gegenüberliegende radiale Durchgänge (33) und ein erster axialer Durchgang (34), der in den Gaskreis eingeschoben ist, gebildet werden, und der Verschluss (32) ein Kugelventil (32) umfasst, das im ersten axialen Durchgang (34) angebracht ist und eine durch einen O-Dichtring (35) gebildete Dichtung und eine durch eine Feder (37) gegen die Dichtung gedrückte Kugel (36) sowie eine Nadel (38) aufweist, die die Kugel (36) von der Dichtung wegdrückt und die radialen Durchgänge (33) kreuzt sowie in einen zweiten axialen Durchgang des Anschlusses (31) eintritt, wobei die Nadel (38) an einer Grundfläche (39) befestigt ist, die der zweiten Feder (17) ausgesetzt ist, deren gegenüberliegendes Ende an der Stützplatte (16) des beweglichen Elements (12) des Solenoids (10) anliegt.

3. Vorrichtung nach Anspruch 1 zur Verwendung mit einem Ventil (32') eines Gasgefäßes (60) wobei der Anschluss (31) einen ersten axialen Durchgang (34) umfasst und der Verschluss eine Stange (38') umfasst, die sich aus dem ersten axialen Durchgang (34) heraus und im Innern einer Gewindeverbindung (40) erstreckt, die im ersten axialen Durchgang (34) angeordnet ist und mit dem Ventil (32') des Gasgefäßes (60) verbindbar ist, wobei das gegenüberliegende Ende der Stange (38') eine Kufe (41) aufweist, die auf eine Nadeleinheit (61) des Ventils (32') einwirkt.

4. Vorrichtung nach Anspruch 1 zur Verwendung mit einer Gasdruck-Reguliervorrichtung, die folgendes umfaßt: einen Regulierkörper (100) mit einer zentralen Kammer (102) zum Regulieren des Gasdrucks, wobei die Kammer von einer Rückwand (103), seitlichen zylindrischen Wänden (104) und einer durch eine Abdeckung (105) gebildete Vorderwand umgeben ist, wobei der Körper (100) eine untere Einlassverbindung (106) und eine obere Auslassverbindung (107) aufweist, die von den Seitenwänden (104) abgeleitet sind und zur Verbindung mit dem Ventil eines Gasgefäßes bzw. mit den Verbindungsrohren einer Vorrichtung vorgesehen sind; einen in der Kammer (102) befestigten Reguliermechanismus (108), mit dem automatisch auf den Gaskreis Druck ausgeübt und dieser geschlossen werden kann; und eine manuelle Vorrichtung (109, 110) zum Schließen des Gaskreises, die zusammen mit der oberen Auslassverbindung (107) angeordnet ist.

5. Vorrichtung nach Anspruch 4, wobei der Reguliermechanismus (108) ein Element (111) umfaßt, das einer pneumatischen Vorrichtung (112) zum Regulieren des Gasdrucks und/oder der automatischen, elektrischen Betätigungseinheit (113) ausgesetzt ist, wobei das Element (111) auf einen Arm (114) einer Reguliervorrichtung (115) einwirkt, die als die Gas-Schließeinheit zum Schließen des Gasdurchgangs dient und in der Nähe der unteren Gaseinlass-Verbindung (106) angeordnet ist; wobei die pneumatische Vorrichtung (112) zum Regulieren des Gasdrucks folgendes umfasst: ein Diaphragma (116), dessen Umfang zwischen dem Körper (100) und der vorderen Abdeckung (105) angeordnet ist, die im zentralen Bereich dem Element (111) ausgesetzt ist und die Stützplatte (117) und die zweite Feder (118) zum Regulieren der Spannung des Diaphragmas aufweist, das zwischen der Platte (117) und einer Stütze (119), die an der vorderen Abdeckung (105) angeordnet ist, zwischengeschoben ist; wobei der Gasleckage-Sensor (121) der automatischen elektrischen Betätigungseinheit (113) so angeordnet ist, dass er das Solenoid (12) betätigt, um den Arm (114) in eine Stellung zu bewegen, bei der die dem Arm ausgesetzte Vorrichtung (115) den Gasdurchgang schließt.

6. Vorrichtung nach Anspruch 5, wobei die pneumatische Vorrichtung (112) zum Regulieren des Drucks des Gases und die automatische, elektrische Betätigungseinheit (113) zusammen an einer Fläche der Gasreguliervorrichtung befestigt sind, insbesondere an der Vorderfläche, die sich gegenüber der Fläche mit der manuellen Vorrichtung (109, 110) zum Schließen des Gaskreises befindet.

7. Vorrichtung nach Anspruch 5, wobei die automatische, elektrische Betätigungseinheit (113) sich an der hinteren Fläche des Regulierkörpers befindet und die Vorrichtung (112) zum Regulieren des Gasdrucks sich an der vorderen Fläche des Regulierkörpers befindet.

8. Vorrichtung nach Anspruch 5, wobei der Regulierkörper (100) von der Druckreguliervorrichtung (112) und von der manuellen Vorrichtung (109, 110) zum Schließen des Gaskreises weggelassen ist und die Gasdruck-Reguliervorrichtung eine Vorrichtung (115), die als Gas-Schließeinheit zum Schließen des Gasdurchgangs dient, einen Arm (114), der die Vorrichtung (115) trägt, und eine Feder, die auf das Ende des Arms (114) gegenüber der Vorrichtung (115) einwirkt und diese in eine Position, die den Gasdurchgang öffnet, bewegt, umfasst, wobei das Solenoid (120) auch auf das Ende des Arms (114) einwirkt und diesen in die Position bewegt, in der die Vorrichtung (115) den Gasdurchgang schließt.

9. Vorrichtung nach einem der vorstehenden Ansprüche, wobei die Haltevorrichtung (18, 126) das Element (19, 127) umfasst, das sich von der Fläche des Elements (15, 125) gegenüber der der Spule (11, 121) zugewandten Fläche erstreckt; und wobei die Halteeinrichtung eine Kugel (18", 128), die von einer Feder (18', 129) gegen das Element (19, 127) gedrückt wird, und einen im Element (19, 127) gebildeten Sitz (19', 130'), der die Kugel (18', 128) in der Position, in der die Vorrichtung den Gasdurchgang schließt, aufnimmt, umfasst.

10. Vorrichtung nach Anspruch 9, wobei die Halteeinrichtung zwei Sitze (130') umfasst, von denen einer zum Halten der Vorrichtung in der Stellung, in der der Gaskreis geschlossen ist, und der andere zum Halten der Vorrichtung in der Stellung, in der der Gaskreis geöffnet ist, dient.

## Revendications

1. Dispositif pour bloquer automatiquement un gaz dans un circuit de gaz, ledit dispositif étant constitué d'un ensemble d'actionnement électrique automatique (1, 113) comprenant un capteur (2, 121') qui détecte toute fuite de gaz et un électro-aimant (10, 120) électriquement relié à celui-ci ; et d'un ensemble de fermeture de gaz (30, 115) dépendant de l'ensemble d'actionnement électrique automatique (1, 113) pour fermer le circuit de gaz lors de la détection d'une fuite de gaz ; ledit életro-aimant (10, 120) comprenant un enroulement (11, 121), un élément mobile (12, 122) dépendant de l'enroulement (11, 121) et un ressort à pression (13, 123) qui agit dans des directions opposées ; ledit élément mobile (12, 122) comprenant une tige (14, 124) qui s'étend axialement à travers l'enroulement (11, 121) et dont une extrémité présente un élément (15, 125) et le ressort à pression (13, 123) dont l'extrémité opposée présente une plaque de support (16, 117) sur lequel agit un second ressort (17, 118), qui agit en collaboration avec l'ensemble de fermeture (30, 115) ; et un dispositif de retenue (18, 126) pour maintenir le dispositif dans la position de blocage du gaz ; ledit dispositif de retenue (18, 126) comprenant un élément (19, 127) prévu sur la surface de l'élément (15, 115) opposée à la surface tournée vers l'enroulement (11, 121) et les moyens de retenue destinés à retenir l'élément (19, 127) dans la position de blocage du dispositif, et un élément de déblocage (20, 131) monté sur l'extrémité de l'élément (19, 127) pour libérer ledit élément (19, 127) de la position de blocage ; et ledit ensemble de fermeture (30, 115) comprenant un raccordement (31) afin de réaliser un raccordement sur le circuit de gaz et un obturateur (32) qui, lorsqu'il est commandé par l'électro-aimant (10, 120), se déplace entre deux positions, une position dans laquelle le circuit de gaz est ouvert et l'autre position dans laquelle le circuit de gaz est fermé.

2. Dispositif selon la revendication 1, dans lequel le raccordement (31) est cruciforme pour former deux passages radiaux opposés (33) et un premier passage axial (34) qui est intercalé dans le circuit de gaz, et ledit obturateur (32) comprend une soupape à bille (32) montée dans ledit premier passage axial (34) et ayant un joint d'étanchéité formé par un joint torique hermétique (35) et une bille (36) sollicitée par un ressort (37) de manière à être poussée contre le joint d'étanchéité et une aiguille (38) qui pousse la bille (36) hors du joint d'étanchéité et qui traverse les passages radiaux (33) et pénètre dans un second passage axial du raccordement (31), ladite aiguille (38) étant montée sur une base (39) dépendante du second ressort (17) dont l'extrémité opposée vient contre la plaque de support (16) de l'élément mobile (12) de l'électro-aimant (10).

3. Dispositif selon la revendication 1, destiné à être utilisé avec une soupape (32') d'un récipient contenant du gaz (60), dans lequel le raccordement (31) comprend un premier passage axial (34) et ledit obturateur comprend une tige (38') qui s'étend hors du premier passage axial (34) et à l'intérieur d'un raccordement fileté (40) assemblé dans ledit premier passage axial (34) et susceptible d'être raccordé à la soupape (32') du récipient contenant du gaz (60), l'extrémité opposée de ladite tige (38') ayant un patin (41) qui agit sur un ensemble d'aiguilles (61) de ladite soupape (32').

4. Dispositif selon la revendication 1, destiné à être utilisé avec un régulateur de pression de gaz et comprenant un corps de régulateur (100) ayant une chambre centrale (102) destinée à réguler la pression du gaz, entourée d'une paroi arrière (103), de parois cylindriques latérales (104) et d'une paroi avant formée par un couvercle (105), ledit corps (100) ayant un raccordement d'entrée inférieur (106) et un raccordement de sortie supérieur (107) dérivé des parois latérales (104) et pour le raccordement respectivement à la soupape d'un récipient contenant du gaz et aux tuyaux de raccordement d'un dispositif ; un mécanisme de régulation (108) pour mettre sous pression et fermer le circuit de gaz automatiquement, monté dans la chambre (102) ; et un dispositif manuel (109, 110) pour fermer le circuit de gaz assemblé conjointement avec le raccordement de sortie supérieur (107).

5. Dispositif selon la revendication 4, dans lequel le mécanisme de régulation (108) comprend un élément (111) dépendant d'un dispositif pneumatique (112) pour réguler la pression du gaz et/ou dudit ensemble d'actionnement électrique automatique (113), l'élément (111) agissant sur un bras (114) d'un dispositif de régulation (115) qui sert de dit ensemble de fermeture de gaz pour fermer le passage de gaz assemblé près du raccordement d'entrée de gaz inférieure (106) ; ledit dispositif pneumatique (112) pour réguler la pression du gaz comprenant : une membrane (116) dont la périphérie est assemblée entre le corps (100) et le couvercle avant (105) dans lequel la zone centrale dépend de l'élément (111) et possède ladite plaque de support (117) et ledit second ressort (118) pour réguler la tension de la membrane intercalée entre la plaque (117) et un support (119) assemblés sur le couvercle avant (105) ; le capteur de fuite de gaz (121) dudit ensemble d'actionnement électrique automatique (113) étant agencé pour actionner l'électro-aimant (12) afin de déplacer le bras (114) dans la position où le dispositif (115) dépendant de ce dernier ferme le passage de gaz.

6. Dispositif selon la revendication 5, dans lequel le dispositif pneumatique (112) pour réguler la pression du gaz et l'ensemble d'actionnement électrique automatique (113) sont montés ensemble sur une surface du régulateur de gaz, en particulier sur la surface avant qui est opposée à celle qui porte le dispositif manuel (109, 110) pour fermer le circuit de gaz.

7. Dispositif selon la revendication 5, dans lequel l'ensemble d'actionnement électrique automatique (113) se trouve sur la surface arrière du corps de régulateur et le dispositif (112) pour réguler la pression du gaz se trouve sur sa surface avant.

8. Dispositif selon la revendication 5, dans lequel le corps du régulateur (100) est dissocié du dispositif de régulation de pression (112) et du dispositif manuel (109, 110) pour fermer le circuit de gaz, et ledit régulateur de pression du gaz comprend un dispositif (115) qui sert de dit ensemble de fermeture du gaz pour fermer le passage de gaz, un bras (114) qui supporte le dispositif (115), et un ressort qui agit sur l'extrémité du bras (114) à l'opposé du dispositif (115) et le déplace dans la position qui ouvre le passage de gaz, l'électro-aimant (120) agissant également sur l'extrémité du bras (114) et le déplaçant dans la position dans laquelle le dispositif (115) ferme le passage de gaz.

9. Dispositif selon l'une quelconque des revendications précédentes, dans lequel ledit dispositif de retenue (18, 126) comprend ledit élément (19, 127) s'étendant de la surface de l'élément (15, 125) à l'opposé de la surface tournée vers l'enroulement (11, 121) ; et lesdits moyens de retenue comprennent une bille (18", 128) sollicitée par un ressort (18', 129) contre l'élément (19, 127) et un siège (19',130') ménagé dans l'élément (19, 127) qui reçoit la bille (18', 128) dans la position où le dispositif ferme le passage de gaz.

10. Dispositif selon la revendication 9, dans lequel les moyens de retenue comprennent deux sièges (130') : un pour maintenir le dispositif dans la position où le circuit de gaz est fermé et l'autre pour maintenir le dispositif dans la position où le circuit de gaz est ouvert.
